# EUROPEAN PATENT APPLICATION

(11) **EP 4 636 863 A1**
(43) Date of publication of application: **22.10.2025**
(21) Application number: 23903399.6
(22) Date of filing: 07.12.2023
(51) Int. Cl.: H01M 4/525, C01G 53/00, H01M 4/36, H01M 4/505

(54) **LITHIUM ION SECONDARY BATTERY POSITIVE ELECTRODE ACTIVE MATERIAL**

(30) Priority: 12.12.2022 JP 2022198057
(71) Applicant: SUMITOMO METAL MINING CO., LTD., Tokyo 105-8716 (JP)
(72) Inventor: IZUMITANI, Rin, Niihama-shi, Ehime 792-0002 (JP)
(74) Representative: Müller-Boré & Partner Patentanwälte PartG mbB
(86) International application number: PCT/JP2023/043783
(87) International publication number: WO 2024/128112

(57) **Abstract**

Provided is a positive electrode active material for a lithium ion secondary battery excellent in particle strength while maintaining favorable battery characteristics.

The positive electrode active material for a lithium ion secondary battery includes a coated lithium-metal composite oxide that is composed of a lithium-metal composite oxide including secondary particles formed by aggregation of primary particles or both the primary particles and the secondary particles and a coating compound on surfaces of the primary particles and the secondary particles of the lithium-metal composite oxide. The coated lithium-metal composite oxide contains lithium, nickel, manganese, and cobalt. The coating compound contains lithium and/or tungsten. The coated lithium-metal composite oxide has a particle strength of 10 to 50 MPa. The secondary particles each include a core occupying an inside of the particle and a shell section surrounding the core and covering its outside. When the cross section of the secondary particle is observed by imaging, the secondary particle has the conditions of: (a) the core having the porous structure with a porosity of 20 to 60%; (b) the shell section having the solid structure with a porosity of 5% or less; and (c) an overall porosity of the secondary particle of 10 to 50%.

## Description

### Technical Field

The present invention relates to a positive electrode active material for a lithium ion secondary battery.

### Background Art

In recent years, clean energy automobiles that are friendly to a global environment, such as a hybrid electric vehicle (HEV), a plug-in hybrid electric vehicle (PHEV), and an electric vehicle (EV), which emit less carbon dioxide, are becoming widespread from a viewpoint of protecting the global environment. Among batteries used in these clean energy vehicles, a lithium ion secondary battery is still being developed because it is excellent in output characteristics, charge and discharge cycle characteristics, and the like.

In addition, while it is difficult to newly build a thermal power plant for burning a fossil fuel, as one effective use method of power in order to cope with an increase in power demand, load leveling is performed in which night power that can be surplus power is stored in a lithium ion secondary battery installed in a general home and used in a daytime when power consumption is large to level a load.

Furthermore, efforts to use a household storage battery constituted by a lithium ion secondary battery together with a photovoltaic power generation system have also gradually expanded. Stored clean power can be used not only in a daytime but also at night, and is also largely expected as an emergency power source when a power failure occurs due to a disaster such as an earthquake or a typhoon.

A lithium ion secondary battery using a lithium-metal composite oxide having a layered or spinel-type crystal structure as a positive electrode active material of such a lithium ion secondary battery can obtain a high voltage of about 4 V, and thus has been put into practical use as a secondary battery exhibiting a high energy density.

As the lithium-metal composite oxide, not only a lithium-cobalt composite oxide (LiCoO₂) which is relatively easily manufactured, but also a lithium-nickel composite oxide (LiNiO₂) using nickel cheaper than cobalt, a lithiummanganese composite oxide (LiMn₂O₄) using manganese, a lithium-nickel-manganese composite oxide (LiNi_{0.5}Mn_{0.5}O₂), a lithium-nickel-manganese-cobalt composite oxide (for example, LiNi_{1/3}Mn_{1/3}Co_{1/3}O₂), a lithium-nickel-cobalt-aluminum composite oxide (for example, LiNi_{0.75}Co_{0.15}Al_{0.10}O₂), and the like have been proposed.

Among these lithium-metal composite oxides, a positive electrode active material including a lithium-nickel-cobalt-aluminum composite oxide (NCA) containing nickel, cobalt, and aluminum at a specific ratio, or a lithium-nickel-manganese-cobalt composite oxide (NMC) containing nickel, manganese, and cobalt at a specific ratio has attracted particular attention as a material having excellent thermal stability, a high capacity, favorable cycle characteristics, low resistance, and a high output.

In addition, for the purpose of obtaining a positive electrode active material having high performance when the lithium-metal composite oxide is used in a lithium ion secondary battery, some techniques focusing on a particle structure of the lithium-metal composite oxide have been disclosed.

Patent Literature 1 discloses a positive electrode active material for a non-aqueous electrolyte secondary battery capable of reducing positive electrode resistance, the positive electrode active material including a lithium-nickel-manganese composite oxide represented by a general formula: Li₁₊ᵤNiₓMn_{y}Co_{z}MₜO₂ (-0.05 ≤ u ≤ 0.50, x + y + z + t = 1, 0.3 ≤ x ≤ 0.7, 0.1 ≤ y ≤ 0.55, 0 ≤ z ≤ 0.4, 0 ≤ t ≤ 0.1, M is an additive element and one or more elements selected from Mg, Ca, Al, Ti, V, Cr, Zr, Nb, Mo, and W) and formed of a hexagonal lithium-containing composite oxide having a layered structure, in which an average particle size is 2 to 8 µm, [(d90 - d10)/average particle size] as an index indicating a spread of particle size distribution is 0.60 or less, a specific surface area is 1 to 2 m²/g, the positive electrode active material has a hollow structure including a hollow portion inside a particle and an outer shell section outside the hollow portion, and the outer shell section has a thickness of 0.5 to 2.5 µm.

Patent Literature 2 discloses a positive electrode active material for a non-aqueous electrolyte secondary battery excellent in coulombic efficiency and reaction resistance, including a lithium-nickel-manganese composite oxide represented by a general formula: LiₐNiₓMn_{y}Co_{z}MₜO₂ (0.95 ≤ a ≤ 1.20, 0.2 ≤ x ≤ 0.8, 0 ≤ y<0.3, 0.07< z ≤ 0.8, 0 ≤ t ≤ 0.1, and x + y + z + t = 1 are satisfied, and M is at least one element selected from Mg, Ca, Ba, Sr, Al, Ti, V, Cr, Zr, Mo, Hf, Ta, and W), and having a hollow or porous structure, in which a sulfate radical content is 0.4% by mass or less, and a sodium content is 0.035% by mass or less.

Patent Literature 3 discloses a positive electrode active material for a lithium battery, formed of a particle having a porous structure in which pores are distributed over the entire internal region of a secondary particle formed of an aggregate of primary particles, in which the pores are radially distributed from a center of the secondary particle, and thus has a large specific surface area, and as a result, an electrolyte solution easily flows into the pores and movement resistance of lithium ions is thus reduced, thereby making it possible to manufacturing a secondary battery having high output characteristics.

Patent Literature 4 discloses, for a positive electrode active material for a lithium secondary battery having excellent rate characteristics, a positive electrode active material for a lithium secondary battery, containing a secondary particle formed by aggregation of a plurality of primary particles of a lithium composite metal oxide, in which the secondary particle has a void formed therein and a through-hole connecting the void and a surfaces of the secondary particle, and satisfies all of the following (i) to (iii).
(i) In a cross section of the secondary particle, a ratio of a short axis length B of a figure surrounded by an outer edge of the cross section to a long axis length A of the figure (B/A) is 0.75 or more and 1.0 or less.
(ii) A ratio of a total area of the voids exposed to the cross section to an area of the figure is 2.0% or more and 40% or less.
(iii) A ratio of an area of a void present in a center of the secondary particle in the voids exposed to the cross section to the total area of the voids exposed to the cross section is 60% or more and 99% or less. (Note that the long axis length is a longest diameter among diameters of the figure passing through a gravity center position of the figure in the figure.) When an area of the figure is represented by S, the center is a portion surrounded by a circle centered on a gravity center position of the figure and having a radius r calculated by a formula "r = (S/π)^{0.5}/2".

### Citation List

### Patent Literature

Patent Literature 1: JP 2012-254889 A
Patent Literature 2: WO 2015-146598 A
Patent Literature 3: JP 2017-533571 A
Patent Literature 4: JP 2019-096406 A

### Summary of Invention

### Technical Problem

However, Patent Literatures 1 to 4 each have a problem that a particle itself is reduced in strength and sufficient durability cannot be thus achieved, as the result of a lithium-metal composite oxide having a high porosity or a particle structure such as the hollow, porous, or multilayer structure in order to improve battery characteristics. Nevertheless, no solution to this problem has been clarified at all so far.

Therefore, the inventor has intensively studied, and found that the above problem can be solved by forming a shell section excellent in particle strength with respect to a core having the high porosity or the particle structure such as the hollow, porous, or multilayer structure, and forming a coating compound excellent in lithium ion conductivity on a surface of a primary particle and a surface of the secondary particle.

The present invention has been made in view of the above problem, and an object thereof is to provide a positive electrode active material for a lithium ion secondary battery excellent in particle strength while maintaining favorable battery characteristics.

### Solution to Problem

In particular, according to one aspect of the present invention for solving the above problem, a first aspect of the present invention is a positive electrode active material for a lithium ion secondary battery, including a coated lithium-metal composite oxide that is composed of a lithium-metal composite oxide including secondary particles formed by aggregation of primary particles or both the primary particles and the secondary particles and a coating compound on surfaces of the primary particles and the secondary particles of the lithium-metal composite oxide, in which the coated lithium-metal composite oxide contains lithium, nickel, manganese, and cobalt, the coating compound contains lithium and/or tungsten, the coated lithium-metal composite oxide has a particle strength of 10 to 50 MPa, the secondary particles each have a core occupying an inside of the particle and a shell section surrounding the core and covering an outside thereof, and the secondary particle has the following conditions (a) to (c), when observed by imaging of a cross section of the secondary particle:
(a) the core has a porous structure with a porosity of 20 to 60%,
(b) the shell section has a solid structure with a porosity of 5% or less, and
(c) an overall porosity of the secondary particle is 10 to 50%.

A second aspect of the present invention is the positive electrode active material for a lithium ion secondary battery according to the first aspect of the present invention, in which, in a particle structure observed by imaging the cross section of the secondary particle of the coated lithium-metal composite oxide, the porous structure exhibits a cross-sectional state in which two or more pores are present in the particle's cross section, and the solid structure exhibits a cross-sectional state in which the particle's cross section is in a filled state.

A third aspect of the present invention is the positive electrode active material for a lithium ion secondary battery according to the first or second aspect of the present invention, in which the coated lithium-metal composite oxide has an average particle size of 3 to 8 µm, and the shell section has a thickness of 0.1 to 2 µm.

A fourth aspect of the present invention is the positive electrode active material for a lithium ion secondary battery according to the first or second aspect of the present invention, in which the coated lithium-metal composite oxide has a specific surface area of 2 to 4 m²/g, a tap density of 0.8 to 2.4 g/cm³, and an oil absorption amount of 25 to 55 ml/100 g.

A fifth aspect of the present invention is the positive electrode active material for a lithium ion secondary battery according to the first or second aspect of the present invention, in which the coated lithium-metal composite oxide is represented by a general formula: LiₐNi_{1-x-y-z}MnₓCo_{y}M_{z}WₛO_{2+α} (0.95 ≤ a ≤ 1.3, 0.01 ≤ x ≤ 0.5, 0.01 ≤ y ≤ 0.5, 0 ≤ z ≤ 0.1, 0 < s ≤ 0.01, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).

A sixth aspect of the present invention is the positive electrode active material for a lithium ion secondary battery according to the first or second aspect of the present invention, in which the coating compound contains lithium tungstate.

### Advantageous Effects of Invention

It is possible to provide a positive electrode active material for a lithium ion secondary battery excellent in particle strength while maintaining favorable battery characteristics.

### Brief Description of Drawings

Figs. 1A and 1B are schematic explanatory views illustrating one embodiment of a coated lithium-metal composite oxide according to the present invention.

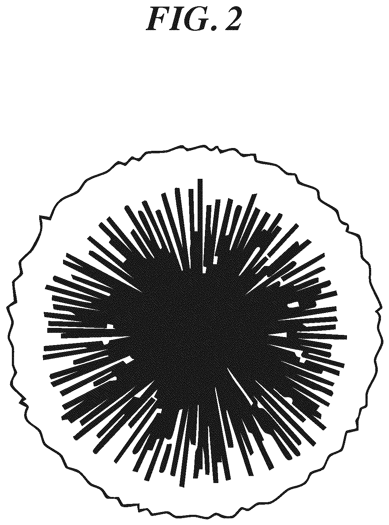

Fig. 2 is an image view of a cross section of a metal composite hydroxide (precursor) according to the present invention.

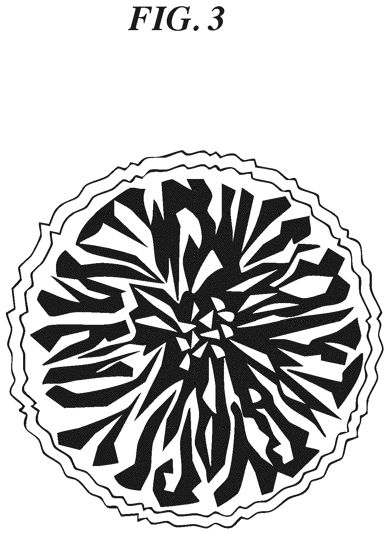

Fig. 3 is an image view of a cross section of a coated lithium-metal composite oxide according to the present invention.
Fig. 4 is a schematic cross sectional view of a coin-type battery used for evaluation of battery characteristics according to the present invention.

### Description of Embodiments

A positive electrode active material for a lithium ion secondary battery (hereinafter, also simply referred to as a "positive electrode active material") according to the present embodiment will be described in detail below.

Note that the present invention is not limited to contents in the following description, and can include various modified examples and alternative examples without departing from the gist of the present invention.

### <Positive electrode active material for lithium ion secondary battery>

The present invention provides a positive electrode active material for a lithium ion secondary battery, which corresponds to a coated lithium-metal composite oxide including a lithium-metal composite oxide constituted by secondary particles obtained by aggregation of primary particles or both the primary particles and the secondary particles, and a coating compound disposed on surfaces of the primary particles and on surfaces of the secondary particles. The coated lithium-metal composite oxide contains lithium, nickel, manganese, and cobalt, the coating compound contains lithium and/or tungsten, the coated lithium-metal composite oxide has a particle strength of 10 to 50 MPa, and the secondary particles each include a core and a shell section and has the following conditions (a) to (c), when observed by imaging a cross section of the secondary particle.
(a) The core has the porous structure and has a porosity of 20 to 60%.
(b) The shell section has the solid structure and has a porosity of 5% or less.
(c) A porosity of the whole secondary particles is 10 to 50%.

### (1) Coating compound containing lithium and/or tungsten

In the past, it was considered that an effect of promoting intercalation and deintercalation, which is a phenomenon in which lithium ions move, was largely limited when a particle surface of a lithium-metal composite oxide (hereinafter, also simply referred to as a "base material"), which is a base material of a positive electrode active material, was completely covered with a different compound, and as a result, an advantage of a high capacity of the lithium-metal composite oxide was lost.

On the other hand, in the coated lithium-metal composite oxide, that is, the positive electrode active material according to the embodiment of the present invention, a coating compound containing lithium and/or tungsten (hereinafter, also simply referred to as a "coating compound") is disposed on a particle surface of a lithium-metal composite oxide, and such a coating compound has high lithium ion conductivity and an effect of promoting intercalation and deintercalation. Therefore, when being incorporated into a secondary battery, the positive electrode active material forms a conduction path of lithium ions at an interface with an electrolyte solution, and therefore can reduce reaction resistance of the positive electrode active material (hereinafter, also simply referred to as "positive electrode resistance") and further improve battery characteristics such as a battery capacity and output characteristics.

When only a secondary particle surface of the lithium-metal composite oxide, which is a base material of the positive electrode active material, is coated with the coating compound containing lithium and/or tungsten, a specific surface area of the positive electrode active material decreases, and when the positive electrode active material is incorporated into a secondary battery, a contact area with an electrolyte solution decreases. Furthermore, the conduction path of lithium ions decreases, and the positive electrode resistance increases, which may cause deterioration of a battery capacity, output characteristics, and the like.

However, in the positive electrode active material of the present invention, since the coating compound is disposed not only on a secondary particle surface but also on a primary particle surface present therein, when the positive electrode active material is incorporated into a secondary battery, a conduction path of lithium ions is sufficiently ensured.

As a result, lithium ion conductivity can be effectively improved, and when the positive electrode active material is used as a positive electrode material of a secondary battery, positive electrode resistance can be reduced, and a higher capacity and a higher output can be achieved.

Furthermore, the form of the coating compound containing lithium and/or tungsten is not particularly limited, but for example, at least a part thereof can be particulate, and at least a part thereof can be in the form of film (layer), but the forms of particulate and film (layer) may be mixed.

When the coating compound containing lithium and/or tungsten is particulate, a particle size thereof is preferably 1 to 200 nm. This is because, due to the particulate form, when the particle size is 1 nm or more, particularly high lithium ion conductivity is obtained, and when the particle size is 200 nm or less, the particles are particularly uniformly disposed on a particle surface of the lithium-metal composite oxide as a base material, and therefore positive electrode resistance can be reduced, and effects of capacity enlargement and higher output can be more effectively exhibited.

In addition, when the coating compound is in the form of film (layer), a thickness thereof is preferably 1 to 200 nm. This is because, due to the film-like (layered) form, when the thickness is 1 nm or more, particularly high lithium ion conductivity is obtained, and when the thickness is 200 nm or less, a conduction path of lithium ions is sufficiently ensured when the positive electrode active material is incorporated into a secondary battery, and positive electrode resistance can be reduced, and effects of capacity enlargement and higher output can be more effectively exhibited.

A property of a particle surface in such a coated lithium-metal composite oxide is not particularly limited, but can be confirmed, for example, by observing a cross-sectional sample of the particle with a transmission electron microscope (TEM).

The coating compound containing lithium and/or tungsten preferably contains lithium tungstate, and preferably contains one or more selected from Li₂WO₄, Li₄WO₅, Li₆WO₆, Li₂W₄O₁₃, Li₂W₂O₇, Li₆W₂O₉, Li₂W₂O₇, Li₂W₅O₁₆, Li₉W₁₉O₅₅, Li₃W₁₀O₃₀, Li₁₈W₅O₁₅, and hydrates thereof. In particular, the coating compound preferably contains Li₂WO₄ and/or Li₄WO₅, and this makes it possible to further increase lithium ion conductivity and largely reduce positive electrode resistance. A method for identifying such a coating compound is not particularly limited, but can be performed, for example, by an X-ray diffraction method (XRD).

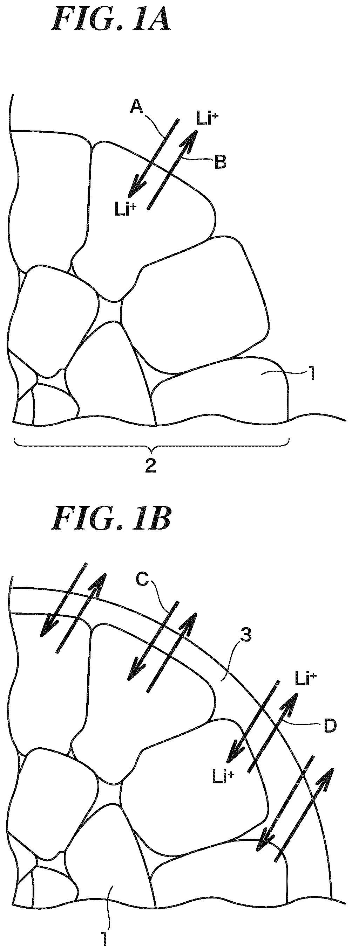

Hereinafter, the positive electrode active material for a lithium ion secondary battery according to the present invention will be described with reference to Figs. 1A and 1B. Figs. 1A and 1B are a schematic explanatory views illustrating one embodiment of the positive electrode active material for a lithium ion secondary battery according to the present invention.

Fig. 1A illustrates the aggregation state of primary particles 1 of a lithium-metal composite oxide as a base material for forming a secondary particle 2. The primary particle 1 and the secondary particle 2 have no compound with high lithium ion conductivity, such as lithium tungstate, disposed on particle surfaces thereof. Thus, intercalation of lithium ions into a crystal lattice indicated by an arrow A and deintercalation into the crystal lattice indicated by an arrow B are not actively performed. Therefore, when such a lithium-metal composite oxide is used as it is in a lithium ion secondary battery, it is considered that positive electrode resistance increases and a battery capacity, output characteristics, and the like decrease.

On the other hand, in the coated lithium-metal composite oxide, that is, the positive electrode active material according to the embodiment of the present invention as illustrated in Fig. 1B, the primary particles 1 are aggregated to form the secondary particle 2, and a coating compound 3 having high lithium ion conductivity such as lithium tungstate is disposed on surfaces of the primary particles 1 and the secondary particle 2. Thus, intercalation of lithium ions into a crystal lattice indicated by an arrow C and deintercalation into the crystal lattice indicated by an arrow D are actively performed due to the high lithium ion conductivity of the coating compound 3. Therefore, when the positive electrode active material is used for a lithium ion secondary battery, it is considered that positive electrode resistance is reduced, and a battery capacity, output characteristics, and the like are improved.

### (2) Composition

The coated lithium-metal composite oxide serving as a positive electrode active material according to the embodiment of the present invention contains lithium, nickel, manganese, and cobalt, and is specifically represented by a general formula: LiₐNi_{1-x-y-z}MnₓCo_{y}M₂WₛO_{2+α} (0.95 ≤ a ≤ 1.3, 0.01 ≤ x ≤ 0.5, 0.01 ≤ y ≤ 0.5, 0 ≤ z ≤ 0.1, 0< s ≤ 0.01, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S). A critical significance thereof is described as follows.

"a" indicating a molar ratio of lithium (Li) is in a range of preferably 0.95 to 1.3, more preferably 0.96 to 1.25, particularly preferably 0.97 to 1.2. Within the above range, it is possible to provide a positive electrode active material for a lithium ion secondary battery excellent in output characteristics and a battery capacity, and a method for manufacturing thereof. On the other hand, when "a" is less than 0.95, positive electrode resistance increases and output characteristics cannot be improved, and when "a" is more than 1.3, an initial discharge capacity decreases and the positive electrode resistance also increases.

"1-x-y-z" indicating a molar ratio of nickel (Ni) is in a range of preferably 0.2 to 0.98, more preferably 0.25 to 0.95, particularly preferably 0.3 to 0.93. Within the above range, when the coated lithium-metal composite oxide is used as a positive electrode active material, higher potential and capacity enlargement of a lithium ion secondary battery can be achieved. On the other hand, when "1-x-y-z" is less than 0.2, higher potential and capacity enlargement cannot be sufficiently achieved, and when "1-x-y-z" is more than 0.98, molar ratios of other elements decrease, and effects of the other elements cannot be sufficiently obtained.

"x" indicating a molar ratio of manganese (Mn) is in a range of preferably 0.01 to 0.5, more preferably 0.05 to 0.45, particularly preferably 0.1 to 0.4. Within the above range, when the coated lithium-metal composite oxide is used as a positive electrode active material, thermal stability of a lithium ion secondary battery can be improved. On the other hand, when "x" is less than 0.01, thermal stability cannot be sufficiently improved, and when "x" is more than 0.5, manganese may be eluted from the positive electrode active material during high-temperature operation, and cycle characteristics may be deteriorated.

"y" indicating a molar ratio of cobalt (Co) is in a range of preferably 0.01 to 0.5, more preferably 0.05 to 0.45, particularly preferably 0.1 to 0.4. Within the above range, when the coated lithium-metal composite oxide is used as a positive electrode active material, cycle characteristics of a lithium ion secondary battery can be improved. On the other hand, when "y" is less than 0.01, an effect of reducing an expansion and shrinkage behavior of a crystal lattice is insufficient, and cycle characteristics cannot be sufficiently improved, and when "y" is more than 0.5, the addition amount of cobalt is too large, and an initial discharge capacity is largely reduced.

M is an element that contributes to output characteristics, durability, stability, and the like of a lithium ion secondary battery, and is optionally added. A value of "z" indicating a molar ratio of M may be 0, but in order to sufficiently obtain the above-described effect, the value of "z" is in a range of preferably more than 0 and 0.1 or less, more preferably more than 0 and 0.05 or less, particularly preferably more than 0 and 0.01 or less. When the value of "z" is 0, output characteristics, durability, stability, and the like of a lithium ion secondary battery cannot be improved. On the other hand, when the value of "z" is more than 0.1, molar ratios of other elements decrease, and effects of the other elements cannot be sufficiently obtained.

As such M, one or more selected from tungsten (W), molybdenum (Mo), vanadium (V), calcium (Ca), magnesium (Mg), strontium (Sr), barium (Ba), titanium (Ti), chromium (Cr), zirconium (Zr), aluminum (Al), niobium (Nb), tantalum (Ta), silicon (Si), phosphorus (P), boron (B), and sulfur (S) can be used.

Furthermore, "s" indicating a molar ratio of tungsten is preferably in a range of more than 0 and 0.01 or less, and when the coated lithium-metal composite oxide is used as a positive electrode active material, a lithium ion conductive compound such as lithium tungstate present on a particle surface forms a conduction path of lithium ions in a well-balanced manner at an interface with an electrolyte solution, and when the coated lithium-metal composite oxide is used as a positive electrode material of a secondary battery, positive electrode resistance can be reduced, and high capacity and high output can be achieved.

### (3) Particle strength

The coated lithium-metal composite oxide serving as a positive electrode active material according to the embodiment of the present invention has a particle strength in a range of preferably 10 to 50 MPa, more preferably 11 to 45 MPa, particularly preferably 12 to 40 MPa. Within the above range, it is possible to provide a positive electrode active material for a lithium ion secondary battery excellent in particle strength while maintaining favorable battery characteristics, and a method for manufacturing the same.

On the other hand, when the particle strength is less than 10 MPa, the secondary particles are pulverized to generate a fine powder in a coated lithium-metal composite oxide crushing process described below. When the particle strength is more than 50 MPa, a filling property in formation of a positive electrode film is deteriorated.

In this regard, the "particle strength" is defined based on fracture strength when a load is applied to a sample particle and the particle is fractured. In evaluation thereof, fracture strength of a plurality (for example, ten) of particles is determined and then an average value thereof is calculated and taken as the "particle strength". A measurement method thereof is not particularly specified, but is performed by a compression test.

### (4) Particle form and particle internal structure

A most part of the coated lithium-metal composite oxide serving as a positive electrode active material according to the embodiment of the present invention has the form of a secondary particle in which a plurality of primary particles is aggregated, however, the coated lithium-metal composite oxide may partially contain a primary particle which is not aggregated as a secondary particle. The shapes of the primary particles constituting the secondary particle and the primary particle present alone are not particularly limited, and various shapes such as a spherical shape, a plate shape, a needle shape, a rectangular parallelepiped shape, an elliptical shape, and a rhombohedral shape can be taken. In addition, the aggregation form of the primary particles is not particularly limited, and it can take various forms including a form in which the primary particles are aggregated in a random direction and a form in which the primary particles are aggregated substantially uniformly and radially from a center to form a secondary particle having a substantially spherical shape or an ellipsoidal shape.

The coated lithium-metal composite oxide having the form of the secondary particle described above includes a particle which adopts the porous structure at a core occupying the inside of the particle and the solid structure at a shell section surrounding the core and covering the outside of the core.

Here, the porous structure refers to a structure indicating a cross-sectional state, in a particle's cross-sectional structure, in which the particle's cross section includes two or more pores, namely, a structure in which many pores are dispersed throughout the inside of the secondary particle. On the other hand, the solid structure refers to a structure indicating a cross-sectional state in which a particle's cross section is in a filled state. That is, the secondary particle has the following particle morphology (a) to (c) when observed by imaging the cross section thereof.
(a) The core has the porous structure, and a porosity of the core is within a range of preferably 20 to 60%, more preferably 25 to 55%, particularly preferably 30 to 50%.
(b) The shell section has the solid structure and a porosity of the shell section is within a range of preferably 5% or less, more preferably 4.9% or less, particularly preferably 4.8% or less.
(c) The overall porosity of the secondary particle is in a range of preferably 10 to 50%, more preferably 12 to 45%, particularly preferably 15 to 40%.

When the porosities are each within the above ranges, it is possible to provide a positive electrode active material for a lithium ion secondary battery excellent in particle strength while maintaining favorable battery characteristics, and a method for manufacturing the same.

### (5) Average particle size (MV)

In the coated lithium-metal composite oxide serving as a positive electrode active material according to the embodiment of the present invention, an average particle size (MV) of the secondary particles is in a range of preferably 3 to 8 µm, more preferably 3.5 to 7.5 µm, particularly preferably 4 to 7 µm. Within the above range, a secondary battery with the positive electrode active material incorporated in a positive electrode has an increased battery capacity per volume, improved safety, and favorable cycle characteristics. However, when the average particle size is less than 3 µm, a prepared positive electrode has a decreased filling density of the particles and a battery capacity per volume of the positive electrode deteriorates. When the average particle size is more than **8** µm, a specific surface area of the positive electrode active material decreases and an interface with an electrolyte solution of a secondary battery decreases, and as a result, resistance of the positive electrode increases and output characteristics of the battery deteriorate.

### (6) Thickness of shell section

In the coated lithium-metal composite oxide serving as a positive electrode active material according to the embodiment of the present invention, the thickness of the shell section is in a range of preferably 0.1 to 2 µm, more preferably 0.3 to 1.5 µm, particularly preferably 0.5 to 1 µm. Within the above range, it is possible to provide a positive electrode active material for a lithium ion secondary battery excellent in particle strength while maintaining favorable battery characteristics, and a method for manufacturing the same.

### (7) Specific surface area

In the coated lithium-metal composite oxide serving as a positive electrode active material according to the embodiment of the present invention, a specific surface area is in a range of preferably 2 to 4 m²/g, more preferably 2.1 to 4 m²/g, particularly preferably 2.2 to 4 m²/g. Within the above range, when the coated lithium-metal composite oxide is used as a positive electrode active material, it sufficiently ensures a particle contact surface that can be in contact with an electrolyte solution. When the specific surface area is less than 2 m²/g, the particle contact surface is too small, thereby making it impossible to achieve a charge and discharge capacity as particles having the porous structure. When the specific surface area is more than 4 m²/g, the particle contact surface is too large, and surface activity may be too high.

### (8) Tap density

In the coated lithium-metal composite oxide serving as a positive electrode active material according to the embodiment of the present invention, a tap density is in a range of preferably 0.8 to 2.4 g/cm³, more preferably 0.9 to 2.3 g/cm³, particularly preferably 1 to 2.2 g/cm³. Within the above range, it is possible to improve in both a battery capacity per unit volume and cycle characteristics of a secondary battery. When the tap density is less than 0.8 g/cm³, a filling property of the positive electrode active material is low, and therefore a charge and discharge capacity cannot be sufficiently improved. When the tap density is more than 2.4 g/cm³, a specific surface area of the positive electrode active material decreases, and therefore a reaction area with an electrolyte solution decreases, thereby resulting in insufficiently improved output characteristics.

### (9) Oil absorption amount

In the coated lithium-metal composite oxide serving as a positive electrode active material according to the embodiment of the present invention, an oil absorption amount is in a range of preferably 25 to 55 ml/100 g, more preferably 26 to 53 ml/100 g, particularly preferably 27 to 50 ml/100 g. Within the above range, when the coated lithium-metal composite oxide is used as a positive electrode active material, it sufficiently ensures a particle contact surface that can be in contact with an electrolyte solution. When the oil absorption amount is less than 25 ml/100 g, the particle contact surface is too small, thereby making it impossible to achieve a charge and discharge capacity as particles having the porous structure. When the oil absorption amount is more than 55 ml/100 g, the particle contact surface is too large, and surface activity may be too high.

### Examples

Hereinafter, the present invention will be specifically described using Examples and Comparative Examples. In the Examples and Comparative Examples described below, reagents manufactured by FUJIFILM Wako Pure Chemical Corporation were used unless otherwise specified. Furthermore, the present invention is not limited by the Examples and Comparative Examples at all.

Followings are various evaluation methods and a battery evaluation method used in Examples and Comparative Examples.

### (Various evaluation methods)

### (1) Property of particle surface

### 1) Form of compound, and average thickness of coating on secondary particle surface

A method for evaluating a property of a particle surface is not particularly limited, but for example, a collected sample is preprocessed by a focused ion beam (FIB) method, and then a particle's cross section of the analysis sample is imaged by a transmission electron microscope (TEM), whereby a property of the particle surface, that **is,** the form (particulate or film-like (layered)) of a coating compound containing lithium and/or tungsten can be confirmed.

In addition, an average thickness of a coating on a secondary particle surface, formed by the coating compound containing lithium and/or tungsten, can be determined by measuring the thicknesses of the coating at four points where two straight lines orthogonal to each other at substantially a center of a particle's cross section intersect with the coating in each of arbitrarily selected 20 particles to be measured using image analysis and measurement software on an obtained cross-sectional image, averaging the obtained thicknesses of the coating at the four points to determine the thickness of the coating of one particle to be measured, and then arithmetically averaging the obtained thicknesses of the coatings of the 20 particles to be measured.

For the evaluation, for example, a focused ion beam machining apparatus (FIB), FB-2000A (manufactured by Hitachi High-Technologies Corporation), a transmission electron microscope (TEM), JEM-ARM200F (manufactured by JEOL Ltd.), image analysis and measurement software, WinRoof6.1.1 (manufactured by MITANI CORPORATION), can be used.

### 2) Identification of compound (such as lithium tungstate contained in coating compound)

A method for evaluating a compound such as lithium tungstate contained in the coating compound is not particularly limited, but for example, the compound can be identified by an X-ray diffraction method (XRD). That is, measurement is performed on a sample collected in a sample holder under conditions of a measurement speed of 2°/min, a tube voltage of 45 kV, a tube current of 40 mA, and a measurement range of 2θ = 10 to 100° using a CuKα ray as a radiation source. Then, a standard diffraction pattern of a compound and a diffraction pattern of the sample are collated using Powder_Diffraction _File (PDF) database in International_Centre_for_Diffraction_Data (ICDD), whereby identification can be performed.

For evaluation, for example, an X-ray diffractometer (XRD), X'PertPRO (manufactured by Spectris Corporation), can be used.

### (2) Composition

A composition was determined by thermally decomposing a sample with an inorganic acid to obtain an analysis specimen solution, and subjecting the analysis specimen solution to measurement using a multi-type ICP emission spectrometer, ICPE-9000 (manufactured by Shimadzu Corporation).

### (3) Particle strength

As for particle strength, a load was applied to one sample particle with an indenter using a micro-strength evaluation tester MCT-500 (manufactured by SHIMADZU CORPORATION), and particle strength when the sample particle was compressed and fractured was calculated. Specifically, measurement was performed by allowing a sample particle to stand still on a silicon plate, finely adjusting a position thereof according to a center of an indenter, and bringing the indenter into contact with the sample particle such that a large load was not applied to the sample particle. Measurement conditions were set to a test force of 150 mN and a load rate of 2.0 mN/sec, and an average value for ten particles was determined.

### (4) Porosity

As for a porosity, a cross-section preparation device, Cross-section Polisher IB-19530CP (manufactured by JEOL Ltd.), was used for cutting a sample particle and a Schottky field emission scanning electron microscope (SEM-EDS), JSM-7001F (manufactured by JEOL Ltd.), was used for observing a cross section thereof. Furthermore, a porosity was determined by measuring a void in the particle's cross section as a black part and measuring a dense portion of the particle as a white part using the image analysis and measurement software, WinRoof6.1.1 (manufactured by Mitani Corporation), and calculating an area ratio of the black part/(black part + white part) for any 20 or more particles.

According to the above, a core porosity, a shell porosity, and an overall porosity of each secondary particle were calculated as follows.

### 1) Core

Core porosity (%) = area of void (black portion) in core /area of entire core (black portion + white portion) × 100

### 2) Shell section

Shell porosity (%) = area of void (black portion) in shell section/area of entire shell section (black portion + white portion) × 100

### 3) Whole secondary particle

Overall porosity (%) of a secondary particle = area of void (black portion) of whole secondary particle/area of whole secondary particle (black portion + white portion) × 100

### (5) Particle structure

As for a particle structure, the cross-section preparation device, Cross-section Polisher IB-19530CP (manufactured by JEOL Ltd.), was used for cutting a sample particle and the Schottky field emission scanning electron microscope (SEM-EDS), JSM-7001F (manufactured by JEOL Ltd.), was used for observing its cross section.

### (6) Average particle size

An average particle size (MV) was determined from a volume-based distribution obtained by subjecting a sample to measurement by a laser diffraction and scattering method. As to a measuring apparatus, a laser diffraction and scattering type particle size distribution measuring apparatus equipped with an ultrasonic generator, Microtrac MT3300EX-II (manufactured by Microtrac Bell Co., Ltd.), was used.

### (7) Thickness of shell section

As for the thickness of the shell section, the average thickness of the shell section was measured by preprocessing a sample particle by a focused ion beam (FIB) method, and then imaging a cross section of the obtained sample particle using a transmission electron microscope (TEM). In addition, the focused ion beam processing apparatus, FB-2000A (manufactured by Hitachi High-Technologies Corporation), was used for the preprocessing and the transmission electron microscope, JEM-ARM200 F (manufactured by JEOL Ltd.), was used for imaging a cross section.

The average thickness of the shell section was determined by measuring the thicknesses of the shell section at four points where two straight lines orthogonal to each other at substantially a center of a particle's cross section intersect with the shell section in each of arbitrarily selected 20 particles to be measured using the image analysis and measurement software, WinRoof6.1.1 (manufactured by Mitani Corporation), on an obtained cross-sectional image, averaging the obtained thicknesses of the shell section at the four points to determine the thickness of the shell section of one particle to be measured, and then arithmetically averaging the obtained thicknesses of the shell sections of the 20 particles to be measured.

### (8) Specific surface area

A specific surface area was determined by analyzing a sample by a nitrogen gas adsorption and desorption method by a BET 1-point method, and for measurement, a gas flow type specific surface area measuring apparatus, MackSorb 1200 series (manufactured by Mountech **Co.,** Ltd.), was used.

### (9) Tap density

A tap density was determined by collecting 12 g of a sample in a measuring cylinder having a capacity of 20 ml, mounting the measuring cylinder on a shaking specific gravity meter, KRS-409 (manufactured by Kuramochi Kagaku Kikai Seisakusho **Co.,** Ltd.), and then repeating an operation of freely dropping the sample from a position of 2 cm in height 500 times.

### (10) Oil absorption amount

An oil absorption amount was determined as a dibutyl phthalate or di-n-butyl phthalate (DBP) absorption amount by using DBP as a reagent liquid and performing measurement with an absorption amount measuring device in accordance with "JIS_K_6217-4:2008 (carbon black for rubber - basic characteristics - Part 4: How to obtain oil absorption amount (including compressed sample))". Since a measurement result is calculated as an absorption amount per 100 g of the sample, a unit is represented by "ml/100 g". For the measurement, S-500 (manufactured by Asahi Soken Co., Ltd.) was used.

### (Battery evaluation method)

### (1) Method for preparing battery (coin-type battery CBA) for evaluation

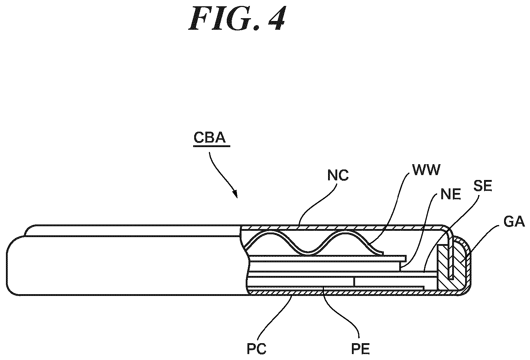

In a method for preparing a battery (coin-type battery CBA) for evaluation illustrated in Fig. 4, first, 52.5 mg of the above positive electrode active material, 15 mg of acetylene black, and 7.5 mg of polytetrafluoroethylene were weighed, mixed, and pressmolded at a pressure of 100 MPa to a diameter of 11 mm and a thickness of 100 µm, thereby preparing a positive electrode PE (electrode for evaluation). Next, the prepared positive electrode PE was dried in a vacuum dryer at 120°C for 12 hours, and then a 2032 type coin-type battery CBA was prepared using the positive electrode PE in a glove box in an argon gas atmosphere with a dew point controlled at -80°C. Metal lithium having a diameter of 17 mm and a thickness of 1 mm was used for a negative electrode NE. An equal volume mixed solution of ethylene carbonate (EC) containing 1 mol of LiClO₄ as a supporting electrolyte and diethyl carbonate (DEC) (manufactured by Tomiyama Pure Chemical Industries, Ltd.) was used for an electrolyte solution, and a polyethylene porous film having a film thickness of 25 µm was used for a separator SE. Note that, in the coin-type battery CBA, a gasket GA and a wave washer WW were disposed, and a positive electrode can PC and a negative electrode can NC were assembled into a coin-type battery.

### (2) Initial discharge capacity

As for an initial discharge capacity, the battery (coin-type battery CBA) for evaluation illustrated in Fig. 4 was left for about 24 hours after preparation thereof to stabilize an open_circuit_voltage (OCV), then a current density for the positive electrode was set to 0.1 mA/cm², and the battery was charged to a cutoff voltage of 4.3 V to determine an initial charge capacity, the battery was discharged to a cutoff voltage of 3.0 V after a pause of one hour, and a capacity at this time was determined as the initial discharge capacity. For the measurement, a multichannel voltage and current generator, R6741A (manufactured by Advantest Corporation), was used.

### (3) Positive electrode resistance

As for positive electrode resistance, Nyquist plot was obtained by preparing the battery (coin-type battery CBA) for evaluation illustrated in Fig. 4, charging the battery for evaluation at a charge potential of 4.1 V, and performing measurement by an AC impedance method using a frequency response analyzer and a potentiogalvanostat. This Nyquist plot is represented as a sum of characteristic curves indicating solution resistance, negative electrode resistance and a capacity thereof, and positive electrode resistance and a capacity thereof. By performing fitting calculation using an equivalent circuit on the basis of the Nyquist plot, the positive electrode resistance was calculated.

### Example 1

### (1) Formation of metal composite hydroxide (precursor)

First, 15 L of water was put into a 60 L reaction tank. The temperature in the tank was set to 40°C while stirring, and a mixed gas with an air-to-argon ratio of 1:6 was continuously caused to pass through the tank maintained at 40°C under stirring. As described above, by using a mixed gas of air, argon, and/or helium, secondary particles excellent in strength can be obtained.

Next, an appropriate amount of an alkaline solution (25% by mass sodium hydroxide aqueous solution) and an appropriate amount of an ammonium ion supplier (25% by mass ammonia water) were added to the water in the tank to prepare a reaction solution such that a pH (on the basis of a liquid temperature of 25°C, the same applies hereinafter) was 12.8 and an ammonium ion concentration was 10 g/L.

On the other hand, nickel sulfate hexahydrate, manganese sulfate monohydrate, and cobalt sulfate heptahydrate were weighed such that a composition ratio (atom%) of nickel, manganese, and cobalt was Ni:Mn:Co = 50:30:20, and were dissolved in water such that a total concentration of nickel, manganese, and cobalt was 2 mol/L to prepare a raw material solution.

Then, the raw material solution was added to the reaction solution in the tank at 100 ml/min, and at the same time, the alkaline solution and the ammonium ion supplier were also added to the reaction solution at a constant rate. Crystallization was performed for one minute while the pH of the reaction solution was maintained at 12.8 (pH in nuclear generation process) and an ammonium ion concentration was maintained at 10 g/L, thereby performing nuclear generation.

The supply of the raw material solution, the alkaline solution, and the ammonium ion supplier was temporarily stopped. Thereafter, sulfuric acid was added until the pH of the reaction solution reached 11.6 (pH in a particle growth process). After the pH reached 11.6, the supply of the raw material solution, the alkaline solution, and the ammonium ion supplier was started again, and the crystallization was continued for 4.5 hours while the pH was maintained at 11.6 and the ammonium ion concentration was maintained at 10 g/L, thereby performing particle growth.

By the crystallization process, a slurry containing a nickel-manganese-cobalt composite hydroxide (Ni_{0.5}Mn_{0.3}Co_{0.2}(OH)₂) serving as a metal composite hydroxide (precursor) in which a core had the porous structure and a solid shell section had the solid structure was obtained.

The obtained slurry containing the metal composite hydroxide was put into a filter press and pressure-filtered to collect a metal composite hydroxide cake. The collected metal composite hydroxide cake was returned to the reaction tank, and the tank was filled with an alkali cleaning liquid (5% by mass sodium hydroxide aqueous solution) and stirred for 30 minutes to perform alkali cleaning. Thereafter, pressure filtration with the filter press was performed again to collect an alkali cleaned cake. This alkali cleaned cake was returned to the reaction tank, and the tank was filled with water and stirred for 30 minutes to perform finish cleaning. Thereafter, pressure filtration with the filter press was performed again to collect a cleaned cake.

The collected cleaned cake was dried at 150°C for five hours using an electric heating dryer to obtain a metal composite hydroxide.

### (2) Formation of metal composite oxide (intermediate)

The obtained metal composite hydroxide (precursor) was heated at 450°C for two hours in an air (oxygen concentration: 21% by volume) flow to be calcined, and then heated at 600°C for five hours in an air (oxygen concentration: 21% by volume) flow to be oxidation-roasted, thereby obtaining a nickel-manganese-cobalt composite oxide (Ni_{0.5}Mn_{0.3}CO_{0.2}O) as a metal composite oxide (intermediate) in which a core had a porous structure and a shell section had a solid structure.

### (3) Formation of lithium-metal composite oxide (base material)

The metal composite oxide (intermediate) obtained by oxidation roasting and lithium hydroxide, which is a lithium compound, were weighed such that a "ratio value (Li/Me)" which is a ratio between the number of atoms of lithium (Li) and the number of atoms of metals (Me) other than lithium was 1.03, and were sufficiently mixed to obtain a lithium mixture. This lithium mixture was heated at 450°C for ten hours in an oxygen (oxygen concentration: 100% by volume) flow to be calcined, and then heated at 860°C for five hours in an oxygen (oxygen concentration: 100% by volume) flow to be fired, thus obtaining a lithium-metal composite oxide (base material).

### (4) Manufacture of coated lithium-metal composite oxide (positive electrode active material)

To the lithium-metal composite oxide (base material) obtained by firing, tungsten trioxide (WO₃), which is a tungsten raw material, was added such that z indicating a tungsten content in the above general formula was 0.002, and then the mixture was put into a mixer and mixed for three hours to obtain a tungsten mixture. Next, onto the obtained tungsten mixture, water was sprayed to clean the tungsten mixture with water to obtain a second cleaned cake. At this time, a moisture content of the obtained second cleaned cake was 7% by mass.

Furthermore, the second cleaned cake was put into an electric heating dryer and dried at 0.1 kPa or less for ten hours while the temperature was maintained at 180°C.

Thereafter, an aggregate contained in the dried product was crushed to finally obtain a coated lithium-nickel-manganese-cobalt composite oxide (Li_{1.03}Ni_{0.5}Mn_{0.3}Co_{0.2}W_{0.002}O₂) serving as a positive electrode active material in which a core had the porous structure, a shell section had the solid structure, and a coating compound containing lithium and/or tungsten was formed on a primary particle surface and the secondary particle surface.

The evaluation results of the obtained coated lithium-metal composite oxide (positive electrode active material) are as presented in Table 1.

### Example 2

The same procedure as in Example 1 was performed except for the following conditions.

### [Formation of metal composite hydroxide (precursor) ]

In the crystallization process, a mixed gas with the air-to-argon ratio of 1:4 was continuously caused to pass through the reaction tank under stirring, and crystallization was performed for 4.5 hours.

### [Formation of metal composite oxide (intermediate) ]

The formation of a metal composite oxide (intermediate) was not carried out, and the metal composite hydroxide (precursor) was fired as a raw material.

The evaluation results of the obtained lithium-metal composite oxide are as presented in Table 1.

### Example 3

The same procedure as in Example 1 was performed except for the following conditions.

### [Formation of metal composite hydroxide (precursor) ]

In the crystallization process, a mixed gas with the air-to-argon ratio of 1:2 was continuously caused to pass through the reaction tank under stirring, and crystallization was performed for 4.5 hours.

### [Formation of metal composite oxide (intermediate) ]

The formation of a metal composite oxide (intermediate) was not carried out, and the metal composite hydroxide (precursor) was fired as a raw material.

The evaluation results of the obtained lithium-metal composite oxide are as presented in Table 1.

### (Comparative Example 1)

The same procedure as in Example 1 was performed except for the following conditions.

### [Formation of metal composite hydroxide (precursor) ]

In the crystallization process, a mixed gas obtained by mixing air with nitrogen such that an oxygen concentration was 7% by volume was continuously caused to pass through the reaction tank under stirring, and crystallization was performed for 4.5 hours.

### [Formation of metal composite oxide (intermediate) ]

The formation of a metal composite oxide (intermediate) was not carried out, and the metal composite hydroxide (precursor) was fired as a raw material.

### [Manufacture of coated lithium-metal composite oxide (positive electrode active material) ]

After the firing process, the second mixing process and the second cleaning process were not performed, and only the crushing process was performed on the lithium-metal composite oxide (base material) as it was.

The evaluation results of the obtained lithium-metal composite oxide are as presented in Table 1.

### (Comparative Example 2)

The same procedure as in Example 1 was performed except for the following conditions.

### [Formation of metal composite hydroxide (precursor) ]

In the crystallization process, first, the inside of the reaction tank was controlled to a non-oxidizing atmosphere having an oxygen concentration of 0.1% by volume under stirring, and nuclear generation was performed while a gas in a gas phase portion was taken into a liquid phase portion. Thereafter, crystallization in the non-oxidizing atmosphere was continued for 0.9 hours to perform particle growth. Next, the supply of the raw material solution, the alkaline solution, and the ammonium ion supplier was stopped, the inside of the reaction tank was switched to an oxidizing atmosphere (air atmosphere) under stirring. The supply of the raw material solution, the alkaline solution, and the ammonium ion supplier was started again, and crystallization in the oxidizing atmosphere was performed for 0.9 hours. Thereafter, switching between crystallization in the non-oxidizing atmosphere and crystallization in the oxidizing atmosphere as described above was performed three times (four times in total, namely, non-oxidation → oxidation → non-oxidation → oxidation → non-oxidation).

### [Formation of metal composite oxide (intermediate) ]

The formation of a metal composite oxide (intermediate) was not carried out, and the metal composite hydroxide (precursor) was fired as a raw material.

### [Manufacture of coated lithium-metal composite oxide (positive electrode active material) ]

After the firing process, the second mixing process and the second cleaning process were not performed, and only the crushing process was performed on the lithium-metal composite oxide (base material) as it was.

The evaluation results of the obtained lithium-metal composite oxide are as presented in Table 1.

**[Table 1]**

| | Gas introduction during crystallization*¹ | Average thickness [nm] of coating on secondary particle surface | Lithium tungstate in coating compound | Particle strength [MPa] | Particle structure | | Porosity [%] | | | Average particle size [µm] | Shell thickness [µm] | Specific surface area [m²/g] | Tap density [g/cm³] | Oil absorption amount [ml/100 g] | Initial discharge capacity [mAh/g] | Positive electrode resistance [Ω] |
|---|---|---|---|---|---|---|---|---|---|---|---|---|---|---|---|---|
| | | | | | Core | Shell | Overall | Core | Shell | | | | | | | |
| Example 1 | Mixed gas of air and argon (Air:Ar=1:6) | 4 | Li₂WO₄, Li₄WO₅ | 38 | Porous | Solid | 17 | 23 | <0.1 (0.04) | 6.5 | 0.6 | 2.2 | 2.2 | 29 | 146 | 2.2 |
| Example 2 | Mixed gas of air and argon (Air:Ar=1:4) | 3 | Li₂WO₄, Li₄WO₅ | 27 | Porous | Solid | 26 | 39 | 3.1 | 6.3 | 0.8 | 3.5 | 1.7 | 41 | 157 | 2.0 |
| Example 3 | Mixed gas of air and argon (Air:Ar=1:2) | 2 | Li₂WO₄, Li₄WO₅ | 19 | Porous | Solid | 34 | 56 | 4.4 | 6.4 | 1.0 | 4.0 | 1.0 | 46 | 167 | 2.4 |
| Comparative Example 1 | Mixed gas of air and nitrogen (Oxygen concentration: 7% by volume) | - | - | 9 | Porous | Solid | 6.2 | 33 | 1.5 | 6.6 | 2.1 | 1.1 | 1.5 | 24 | 141 | 4.8 |
| Comparative Example 2 | Air and nitrogen are sequentially switched | - | - | 7 | No core, no shell Porous | | 51 | - | - | 6.1 | - | 4.1 | 1.3 | 56 | 166 | 46 |

| | | | | | | | | | | | | | | | | |
|---|---|---|---|---|---|---|---|---|---|---|---|---|---|---|---|---|
| *1: Air/air, Ar/argon gas | | | | | | | | | | | | | | | | |

### [Overall evaluation]

All the coated lithium-metal composite oxides (positive electrode active materials) obtained in Examples 1 to 3 within the scope of the present invention were confirmed to have excellent particle strength as compared with that of the lithium-metal composite oxides obtained in Comparative Examples 1 and 2 deviating from the scope of the present invention. In addition, it was also confirmed that the coated lithium-metal composite oxides of Examples 1 to 3, when each used in a lithium ion secondary battery, they exhibited the initial discharge capacity equal to or greater, in consideration of the overall porosity, and positive electrode resistance remarkably lower, as compared with those of the lithium-metal composite oxides of Comparative Examples 1 and 2. Note that, in Comparative Example 1, the secondary particle of the lithium-metal composite oxide was formed of a core having the porous structure and a shell section having the solid structure as in Examples 1 to 3, however, the particle strength was not improved. As a reason for this, it is considered that there is a large problem in atmosphere control (composition of a mixed gas or the like) in the reaction tank in the crystallization process.

In addition, the technical scope of the present invention is not limited to the aspects described in the above embodiment and the like. One or more of the requirements described in the above embodiment and the like may be omitted. Note that the requirements described in the above embodiment and the like can be appropriately combined. Furthermore, contents of all documents cited in the present specification are incorporated and form a part of the description of the present text as long as it is permitted by law.

### Reference Signs List

1 Primary particle
2 Secondary particle
3 Coating compound
A, C Intercalation of lithium ions into crystal lattice (arrows A and C)
B, D Deintercalation of lithium ions from crystal lattice (arrows B and D)
CBA Coin-type battery (for evaluation)
PE Positive electrode (electrode for evaluation)
NE Negative electrode
SE Separator
GA Gasket
WW Wave washer
PC Positive electrode can
NC Negative electrode can

## Claims

1. A positive electrode active material for a lithium ion secondary battery, comprising a coated lithium-metal composite oxide that comprises a lithium-metal composite oxide including secondary particles formed by aggregation of primary particles or both the primary particles and the secondary particles and a coating compound on surfaces of the primary particles and the secondary particles of the lithium-metal composite oxide, wherein
the coated lithium-metal composite oxide contains lithium, nickel, manganese, and cobalt,
the coating compound contains lithium and/or tungsten,
the coated lithium-metal composite oxide has a particle strength of 10 to 50 MPa,
the secondary particles each have a core occupying an inside of the secondary particle and a shell section surrounding the core and covering an outside thereof, and
the secondary particle has following conditions (a) to (c), when observed by imaging of a cross section of the secondary particle:
(a) the core has a porous structure with a porosity of 20 to 60%,
(b) the shell section has a solid structure with a porosity of 5% or less, and
(c) an overall porosity of the secondary particle is 10 to 50%.

2. The positive electrode active material for a lithium ion secondary battery according to claim 1, wherein in a particle structure observed by imaging the cross section of the secondary particle of the coated lithium-metal composite oxide, the porous structure exhibits a cross-sectional state in which two or more pores are present in the cross section of the particle, and the solid structure exhibits a cross-sectional state in which the cross section of the particle is in a filled state.

3. The positive electrode active material for a lithium ion secondary battery according to claim 1 or 2, wherein the coated lithium-metal composite oxide has an average particle size of 3 to 8 µm, and the shell section has a thickness of 0.1 to 2 µm.

4. The positive electrode active material for a lithium ion secondary battery according to claim 1 or 2, wherein the coated lithium-metal composite oxide has a specific surface area of 2 to 4 m²/g, a tap density of 0.8 to 2.4 g/cm³, and an oil absorption amount of 25 to 55 ml/100 g.

5. The positive electrode active material for a lithium ion secondary battery according to claim 1 or 2, wherein the coated lithium-metal composite oxide is represented by a general formula: LiₐNi_{1-x-y-z}MnₓCo_{y}M_{z}WₛO_{2+α} (0.95 ≤ a ≤ 1.3, 0.01 ≤ x ≤ 0.5, 0.01 ≤ y ≤ 0.5, 0 ≤ z ≤ 0.1, 0 < s ≤ 0.01, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).

6. The positive electrode active material for a lithium ion secondary battery according to claim 1 or 2, wherein the coating compound contains lithium tungstate.
